# EUROPEAN PATENT APPLICATION

(11) **EP 0 785 411 A1**
(43) Date of publication of application: **23.07.1997**
(21) Application number: 95932953.3
(22) Date of filing: 02.10.1995
(51) Int. Cl.: G01B 11/24

(54) **CONFOCUS OPTICAL APPARATUS**

(30) Priority: 30.09.1994 JP 237804/94
(71) Applicant: KOMATSU LTD., Minato-ku, Tokyo 107 (JP)
(72) Inventor: WAKAI, Hideyuki, Hiratsuka-shi Kanagawa 254 (JP); MORIYA, Masato, Hiratsuka-shi Kanagawa 254 (JP)
(74) Representative: Fiener, Josef
(86) International application number: JP9502006
(87) International publication number: WO9610728

(57) **Abstract**

A confocus optical apparatus includes an aperture array having a plurality of apertures disposed two-dimensionally, an object of measurement disposed on a predetermined inspection surface, optical means for guiding light so that the aperture array position can b a first condensing position and the inspection surface position can be a second focusing position, a light source for reference light of a hologram, the hologram disposed at a predetermined position between the aperture array and the inspection surface, for reproducing light equivalent to light emitted from each spot light source through each aperture of the aperture array to this predetermined position, by using light from the light source as reference light, and an optical detector array having a plurality of optical detectors for detecting light passing through each aperture of the aperture array, disposed on the opposite side to the optical means while interposing the aperture array between them, wherein reproducing light of the hologram scattered by the measured article is allowed to be incident into each optical detector of the optical detector array through the hologram, the optical means and the aperture array. In this way, the size and weight of the apparatus can be reduced, three-dimensional shape measurement can be made highly accurately and at a high speed, positioning of each portion can be made easily, and utilization efficiency of light source light can be improved.

## Description

### TECHNICAL FIELD

This invention relates to a three-dimensional shape measuring device in which a confocal optical system is utilized, and more particularly to a confocal optical device involving the use of holograms.

### BACKGROUND ART

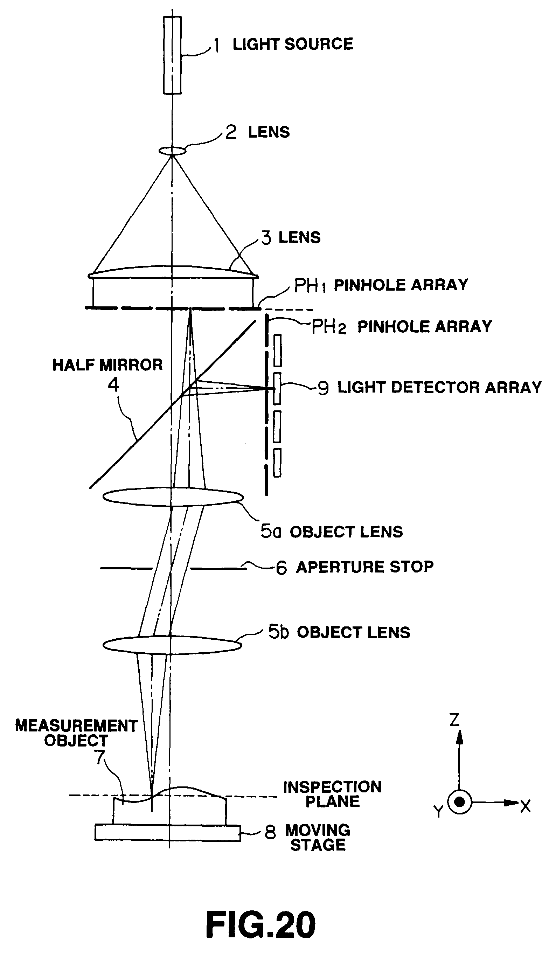

Two-dimensional arrangements of confocal optical systems such as the one described in Japanese Laid-Open Patent Application 4-265918 are used to measure the shapes of objects. The structure of such a system is shown in Fig. 20.

In Fig. 20, light from a light source 1 is collimated by lenses 2 and 3 and is directed at a pinhole array PH1. The pinhole array PH1 consists of pinholes arranged in a matrix. Light that has passed through the pinhole array PH1 is transmitted by a half-reflecting mirror 4, condensed by lenses 5a and 5b, which form a telecentric system with an aperture stop, and directed at a measurement object 7. The measurement object 7 is placed on a moving stage 8 displaceable in the direction of the Z-axis. Light reflected by the measurement object 7 is collected by the lenses 5a and 5b and is reflected by the half-reflecting mirror 4, forming an image at a position conjugate to the pinhole array PH1. A pinhole array PH2 is placed at this imaging position, and the light passing through the pinholes is detected by the light detectors of a light detector array 9.

With this conventional structure, the individual outputs of the light detectors 9 are sampled while the moving stage 8 is displaced in the Z-direction, making it possible to detect the position in the Z-direction at the maximum output of each light detector as the surface position of the object 7.

The above-described conventional device has the following drawbacks, however.
(1) To obtain a highly accurate confocal effect, it is necessary to fabricate the pinhole arrays PH1 and PH2 with high precision (for example, with submicron precision) in order to accurately match the pitches of the two pinhole arrays. It is also necessary to position the pinhole arrays with the aforementioned high precision at conjugate positions on two sides of a half-reflecting mirror 4 and to maintain these arrays in a fixed state. In particular, a prismatic mirror is commonly used for the half-reflecting mirror 4, and the distance from the focal position (pinhole array PH1) of the light source of a confocal unit or the focus (pinhole array PH2) of received light to the half-reflecting mirror 4 varies with the confocal unit, making it necessary to fabricate a highly accurate prismatic half-reflecting mirror in order to satisfy the aforementioned positioning accuracy requirements.
(2) An object lens 5 must be designed with consideration for the aberration that occurs when beams of light pass through the prismatic half-reflecting mirror 4. Because the aberration of the prismatic half-reflecting mirror 4 corresponds to the aberration of a flat glass plate whose thickness corresponds to the length of a side of the prismatic half-reflecting mirror 4, this aberration is considerable, and it is very difficult to design the object lens 5 while taking into account such considerable aberration.
(3) Because the prismatic half-reflecting mirror 4 requires a three-dimensional region, the distance from the object lens 5a to the focus of the light source or the distance from the object lens 5a to the focus of received light cannot be made smaller than the length of a side of the half-reflecting mirror 4, imposing limits on making the device smaller and lighter. This presents an additional obstacle when attempts are made to obtain an optical numerical aperture necessary for performing measurements using an object lens of short focal distance.
(4) Light utilization efficiency is low and only several percent of light from the light source is used because light from the light source incident on the pinhole array PH1 does not pass through portions other than the pinholes. Considerable time is therefore needed to obtain a sufficient luminous energy of detection, limiting the extent to which the time for measuring the shape of an object can be reduced.

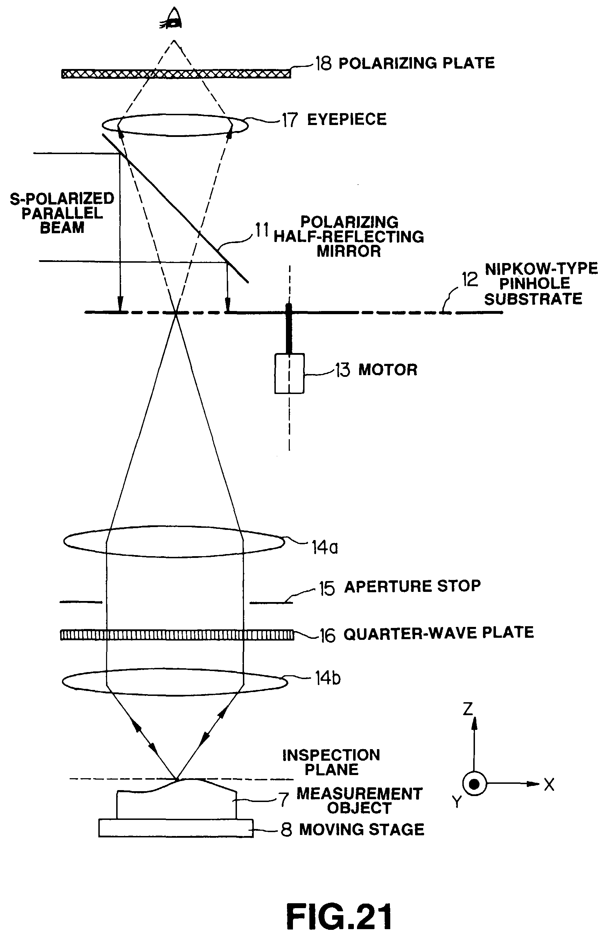

In view of this, it was proposed in Japanese Laid-Open Patent Application 1-503493 to compose the focal distance of a light source and the focus of received light from the same pinholes in order to overcome the drawbacks 1 through 3 described above. The structure of the proposed device is shown in Fig. 21.

In Fig. 21, an S-polarized parallel beam is reflected by a polarizing half-reflecting mirror 11 and directed at a pinhole substrate 12. The pinhole substrate 12, which is a Nipkow disk containing spirally disposed pinholes, transforms the incident parallel beam into a plurality of point light sources. The pinhole substrate 12 is rotated by a motor 13.

Light that has passed through the pinhole substrate 12 is condensed by lenses 14a and 14b, which form a telecentric system with an aperture stop 15, converted to circular polarized light by a quarter-wave plate 16, and is directed at a measurement object 7. Light reflected by the measurement object 7 is converted to P-polarized light by the quarter-wave plate 16, condensed by the lenses 14a and 14b, and passed through the same pinholes in the pinhole substrate 12. Light that has passed through the pinhole substrate 12 is transmitted first by the polarizing half-reflecting mirror 11 and then by a polarizing plate 18 for transmitting P-polarized light, whereby visual observations can be made through an eyepiece 17. The measurement object 7 is scanned in the X- and Y-directions by rotating the pinhole substrate 12 with the aid of a motor 13.

The device shown in Fig. 21 relates to optical microscope technology, and hence requires visual observation. A light detector array should therefore be placed at the imaging position of the eyepiece 17 in order to perform three-dimensional measurements with the aid of light sensors such as those shown in Fig. 20 in the structure shown in Fig. 21, and a pinhole matrix array such as that shown in Fig. 20 above should be used in place of the pinhole substrate 12 of the Nipkow disk.

The fact that the same pinholes are used for the focus of the light source and for the focus of received light in the above-described device overcomes drawbacks such as those described in sections 1 through 3 above, but the following disadvantages still remain.
(a) It is necessary to take into account the aberration caused by the polarizing half-reflecting mirror and the imaging aberration caused by the eyepiece in the relation between the pinhole array and the light detector array, and to align with high accuracy each pinhole of the pinhole array and each light detector of the light detector array on a one-to-one basis.
(b) Light utilization efficiency is low and only several percent of light from the light source is used because the light from the light source incident on the pinhole array (pinhole substrate 12) does not pass through portions other than the pinholes. Considerable time is therefore needed to obtain a sufficient luminous energy of detection, limiting the extent to which the time for measuring the shape of an object can be reduced.
   In addition, the following problem is specific to the device in Fig. 21.
(c) Because light from a light source incident on the pinhole substrate 12 is reflected by portions other than pinholes, the reflectivity of the pinhole substrate 12 must be set to a level at which the aforementioned deflection characteristics are utilized, the pinhole substrate 12 itself is offset with respect to the optical axis, or other measures are taken to prevent reflected light from being observed. Specifically, this problem is caused by a confocal optical system in which light from the back of the pinhole substrate is cast to form point light sources and in which light is received by the same pinholes. Better measures are needed because the reflected light lowers the S/N ratio of measurement signals.

Furthermore, in the device shown in Fig. 20 or 21 above, the moving stage 8 must be moved at a higher speed in order to reduce the shape measurement time, but such high-speed movement is limited because it is necessary to place a measurement object on the moving stage 8. Specifically, it is difficult to use a fast-moving stage in order to move, for example, a very heavy and large measurement object or a measurement object that is incapable of withstanding the inertial force created by high-speed displacement because of a delicate structure.

To address these problems, it has been proposed to fix the measurement object 7 and to move and displace the measuring instrument itself in the Z-direction. However, the measuring instrument itself must be compact and lightweight and have a stable structure capable of withstanding the inertial force created by high-speed displacement. The above-described prior art, however, has no provisions for high-speed movement, and it is likely that a confocal optical system will break or other problems will occur during high-speed movement.

An object of this invention, which was devised in view of the above situation, is to provide a confocal optical device that can be made compact and lightweight, that allows three-dimensional shape measurements to be performed rapidly and accurately, that facilitates the alignment of components, and that raises the utilization efficiency of light from a light source.

### SUMMARY OF THE INVENTION

The first invention, which corresponds to Claim 1, comprises an aperture; a measurement object positioned at a prescribed inspection point; optical means for guiding light in such a way that a position of the aperture serves as a first condensing position, and a position of the inspection point serves as a second condensing position; a light source for a reference beam of a hologram; the hologram that is placed in a prescribed position between the aperture and the inspection point, that uses light from the light source as the reference beam, and that reproduces light equivalent to that obtained when the light from point light sources that is emitted by the aperture passes through the predetermined position; and a light detector that is positioned on a side opposite the optical means and the interlying aperture and that detects light that has passed through the aperture; wherein hologram-reproduced light scattered by the measurement object is directed at the light detector via the hologram, optical means, and aperture. The hologram essentially functions as an optical component that combines the roles of a point light source array (pinholes) and a half-reflecting mirror in a conventional device.

Specifically, the first invention involves illuminating the hologram with a reference beam so that light equivalent to the light from point light sources that is emitted by the aperture is reproduced, and this reproduced light is condensed on the measurement object either directly or via the optical means. Light scattered by the measurement object is condensed in the aperture by the optical means and the hologram, then allowed to pass through the aperture, and detected by the light detector.

The second invention, which corresponds to Claim 2, comprises an aperture array having a plurality of apertures arranged in two dimensions; a measurement object positioned on a prescribed inspection plane; optical means for guiding light in such a way that a position of the aperture array serves as a first condensing position, and a position of the inspection plane serves as a second condensing position; a light source for a reference beam of a hologram; the hologram that is placed in a prescribed position between the aperture array and the inspection plane, that uses light from the light source as the reference beam, and that reproduces light equivalent to that obtained when the light from point light sources that is emitted by the apertures of the aperture array passes through the predetermined position; and a light detector array that is composed of a plurality of light detectors, that is positioned on a side opposite the optical means and the interlying aperture array, and that detects light that has passed through the apertures of the aperture array; wherein hologram-reproduced light scattered by the measurement object is directed at the light detectors of the light detector array via the hologram, optical means, and aperture array.

Specifically, the second invention involves illuminating the hologram with a reference beam so that light equivalent to the light from point light sources that is emitted by the apertures of the aperture array is reproduced, and this reproduced light is condensed on the measurement object either directly or via the optical means. Light scattered by the measurement object is condensed in the apertures of the aperture array by the optical means and the hologram, then allowed to pass through the apertures, and detected by the light detectors of the light detector array.

The third invention, which corresponds to Claim 4, comprises an aperture array having a plurality of apertures arranged in two dimensions; a light-transmitting measurement object positioned on a prescribed inspection plane; optical means for guiding light in such a way that a position of the aperture array serves as a first condensing position, and a position of the inspection plane serves as a second condensing position; a light source for a reference beam of a hologram; the hologram that is placed in a prescribed position on a side opposite the optical means and the interlying measurement object in the inspection plane, that uses light from the light source as the reference beam, and that reproduces light equivalent to the light reverse with respect to light obtained when the light from point light sources that is emitted by the apertures of the aperture array passes through the predetermined position; and a light detector array that is composed of a plurality of light detectors, that is positioned on the side opposite the optical means and the interlying aperture array, and that detects light that has passed through the apertures of the aperture array; wherein the hologram-reproduced light transmitted by the measurement object is directed at the light detectors of the light detector array via the optical means and aperture array.

According to the third invention, the hologram is located in a prescribed position on the side opposite the optical means and the interlying measurement object in the detection plane. Specifically, the third invention involves illuminating the hologram with a reference beam so as to reproduce light equivalent to the light reverse with respect to light obtained when the light from point light sources that is emitted by the apertures of the aperture array passes through the predetermined position, and this reproduced light passes through the measurement object. Light transmitted by the measurement object is condensed in the apertures of the aperture array via the optical means, then allowed to pass through the apertures, and detected by the light detectors of the light detector array.

The fourth invention, which corresponds to Claim 10, comprises a light detector array composed of a plurality of light detectors arranged in two dimensions; a measurement object positioned on a prescribed inspection plane; optical means for guiding light in such a way that a position of each light detector of the light detector array serves as a first condensing position, and a position of the inspection plane serves as a second condensing position; a light source for a reference beam of a hologram; and the hologram that is placed between the light detector array and the optical means, that uses light from the light source as the reference beam, and that reproduces light equivalent to the light from point light sources that is emitted from the position of each light detector of the light detector array; wherein the hologram-reproduced light is used to illuminate the measurement object via the optical means, and hologram-reproduced light scattered by the measurement object is directed at the light detectors of the light detector array via the optical means and hologram.

The fourth invention is devoid of an aperture array. Specifically, the fourth invention involves exposing the hologram as if point light sources were positioned on the light detectors of the light detector array. The hologram-reproduced light therefore illuminates the measurement object via the optical means. Hologram-reproduced light scattered by the measurement object is directed at the light detectors of the light detector array via the optical means and hologram.

The optical device of the fifth invention, which corresponds to Claim 12, comprises an aperture array composed of a plurality of apertures arranged in two dimensions; a glass substrate laminated underneath this aperture array; and a hologram that is laminated underneath this glass substrate and that reproduces light equivalent to the light from point light sources that is emitted by the apertures of the aperture array when illuminated with a reference beam; wherein the aperture array and hologram act as pinholes.

In the fifth invention, the hologram reproduces light equivalent to that obtained when point light sources are positioned in the apertures of the aperture array. In this case, therefore, there is no need to use an aperture array in order to generate light from such point light sources. The aperture array can be used, for example, to receive light after the hologram-reproduced light has been reflected by the measurement object. In other words, in an optical device that performs pinhole functions, the light-emitting action is performed by the hologram, and the light-receiving function is performed by the aperture array.

Specifically, this invention uses a hologram to reproduce light that is equivalent to that emitted by point light sources and allows the hologram to function as a point light source array and a half-reflecting mirror, making it unnecessary to align the pinhole array for the point light sources and the pinhole array for light reception. Another advantage is that because a hologram is thinner than a half-reflecting mirror, optical aberration or positional interference with the object lens is extremely small.

Yet another advantage is that because the refraction efficiency of the hologram can be set as needed, the utilization efficiency of light from a light source can be dramatically improved in comparison with a conventional pinhole system by setting the refraction efficiency to about 50%, for example. In addition, light emitted by a light source and directed at a pinhole array can be securely prevented from being reflected by and observed on portions other than pinholes. Such reflection has been a drawback of prior art.

Furthermore, laminating a light detector array, an aperture array, and a hologram into an integrated structure on a plane makes it possible to obtain a compact, lightweight, and stable confocal optical unit capable of withstanding high-speed movement and scanning. In addition, the range of design options is extremely wide because the hologram can be placed between the light detector array and the detection plane.

### BRIEF DESCRIPTION OF THE DRAWINGS

Fig. 1 is a diagram depicting the first embodiment of this invention;
Fig. 2 is a diagram depicting a structure for exposing the hologram of the first embodiment;
Fig. 3 is a diagram depicting the manner in which a microlens array is positioned in front of a pinhole array;
Fig. 4 is diagram depicting the second embodiment of this invention;
Fig. 5 is a diagram depicting the third embodiment of this invention;
Fig. 6 is a diagram depicting a detailed structure of the laminated-structure unit of the third embodiment;
Fig. 7 is a diagram illustrating a technique for manufacturing the aforementioned laminated-structure unit;
Fig. 8 is a diagram illustrating another technique for manufacturing the aforementioned laminated-structure unit;
Fig. 9 is a diagram depicting another example of the aforementioned laminated-structure unit;
Fig. 10 is a diagram depicting yet another example of the aforementioned laminated-structure unit;
Fig. 11 is a diagram depicting the fourth embodiment of this invention;
Fig. 12 is a diagram detailing the laminated-structure unit used in the fourth embodiment;
Fig. 13 is a diagram depicting the fifth embodiment of this invention;
Fig. 14 is a diagram illustrating a technique for exposing the hologram used in the fifth embodiment;
Fig. 15 is a diagram illustrating another technique for exposing the hologram used in the fifth embodiment;
Fig. 16 is a diagram depicting a modification of the fifth embodiment;
Fig. 17 is a diagram depicting the sixth embodiment of this invention;
Fig. 18 is a diagram depicting a method for exposing the hologram used in the sixth embodiment;
Fig. 19 is a diagram depicting a modification of the sixth embodiment;
Fig. 20 is a diagram depicting a conventional technique;
Fig. 21 is a diagram depicting another conventional technique;
Fig. 22 is a diagram depicting another example of the laminated-structure unit;
Fig. 23 is a diagram depicting still another embodiment of this invention; and
Fig. 24 is a diagram depicting yet another example of the laminated-structure unit.

### BEST MODE FOR CARRYING OUT THE INVENTION

Embodiments of this invention will now be described with reference to the accompanying drawings.

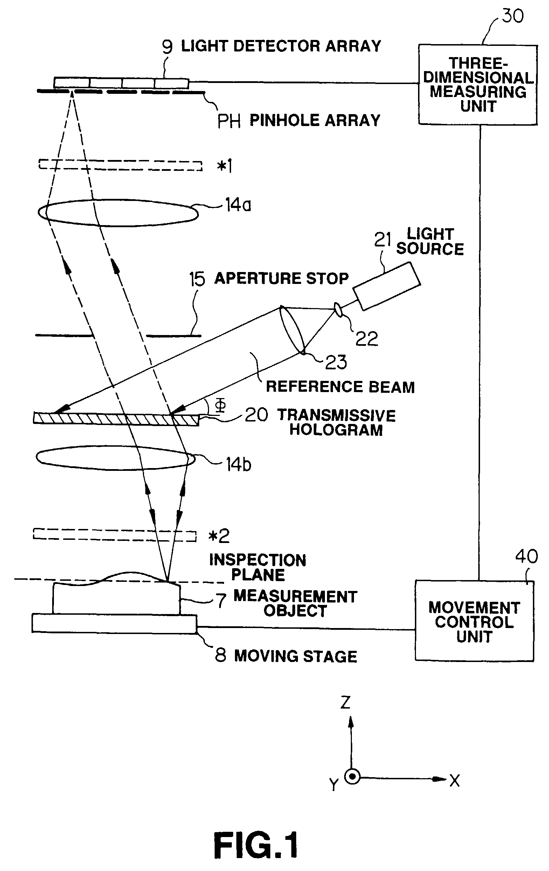

In Fig. 1, which depicts the first embodiment of this invention, 7 is a measurement object, 8 is a moving stage capable of moving in the Z-direction, 9 is a light detector array composed of a plurality of light detectors arranged in a matrix, PH is a pinhole array composed of a plurality of pinholes arranged in a matrix, 14a and 14b are object lenses, 15 is an aperture stop, 20 is a hologram, 21 is a light source for the reference beam, 22 and 23 are lenses, 30 is a three-dimensional measuring unit for measuring the measurement object 7 in three dimensions on the basis of the output from the light detectors, and 40 is a movement control unit for controllably moving the moving stage 8. The lenses 14a and 14b form a telecentric optical system with the aperture stop 15.

In the above structure, the hologram 20 is used as a means for reproducing light from point light sources, and illuminating the hologram 20 with the reference beam from the light source 21 allows light to be reproduced as if it were emitted by the pinholes of the pinhole array PH.

Consequently, directing the reference beam to the hologram 20 from the light source 1 via the lenses 22 and 23 allows the hologram 20 to reproduce light as if point light sources were positioned in the pinholes of the pinhole array PH. The reproduced light is caused by the lens 14b to form an image on the measurement object 7 of the moving stage 8. For the sake of simplicity, Fig. 1 depicts light emitted by a single pinhole, but in reality the image in the inspection plane consists of point images equivalent to those obtained when light is emitted by all the pinholes.

Light reflected by the measurement object 7 is passed through the lens 14b, hologram 20, and aperture stop 15, directed at the lens 14a, and caused by the lens 14a to form an image at each pinhole position of the pinhole array PH. The light detectors of the light detector array 9 are positioned in conformity with the pinholes of the pinhole array PH, detecting the light-reception intensity of light that has passed through the pinholes.

The output of each light detector of the light detector array 9 is inputted to the three-dimensional measuring unit 30, where the outputs of the individual detectors comprising the light detector array 9 are sequentially sampled as the moving stage 8 controlled by the movement control unit 40 is moved in the Z-direction, and the position in the Z-direction at each maximum output is detected as the surface position of the measurement object 7.

Here, the incidence angle Φ of the reference beam with respect to the hologram 20 should be minimized in order to prevent light reflected or transmitted by the hologram 20 from striking the inspection plane of the measurement object 7 or the detection plane of the aforementioned light detector array 9 either directly or via the lens 14b, the aperture stop 15, or the like. An excessively small incidence angle Φ, however, will reduce the amount of light entering the hologram medium and will make it impossible to reproduce or expose a point light source of adequate luminous energy, so the incidence angle Φ should be set in such a way that both these conditions are satisfied. Reducing the incidence angle Φ has the advantage of bringing the optical components 14a, 14b, and 15 of the telecentric system closer to each other and making the device more compact.

In Fig. 1, the hologram 20 may be in position *1 (between the pinhole array PH and the lens 14a) or in position *2 (between the lens 14b and the detection plane). These positions are shown by broken lines. In addition, the hologram 20 may be placed between the lens 14a and the aperture stop 15. In other words, the hologram 20 may be positioned at any point on the optical path between the pinhole array PH and the detection plane.

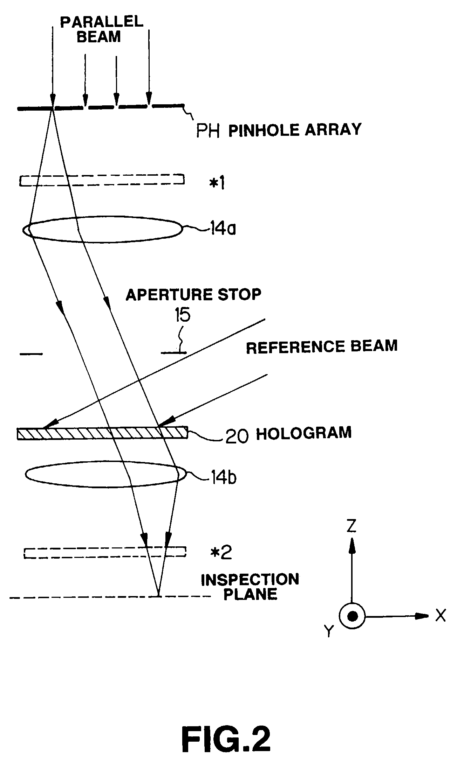

Fig. 2 shows an arrangement for exposing the hologram 20. The pinhole array PH, lens 14a, aperture stop 15, light source 21, and lenses 22 and 23 are the same as those in Fig. 1, and these components have the same positional arrangement as in Fig. 1.

In this state, the reference beam from the light source 21 is directed at the hologram 20, and a parallel beam is directed as object light at the pinhole array PH. As a result, a plurality of point light source images formed on the pinhole array are converted to a parallel beam by the lens 14a and are directed in this state at the hologram 20 and recorded there. In this case, the hologram 20 is transmissive because the reference beam and the object light are incident on one side of the hologram 20.

Assuming that the diffraction efficiency of the hologram 20 is 50%, the measurement object 7 is illuminated with 50% of the reference beam, and about 50% of the light reflected from the object 7 passes through the hologram 20 and strikes the light detector array 9, making it possible to markedly improve the utilization efficiency of light from a light source in comparison with conventional technology.

Silver salt photosensitive materials, polymer photosensitive materials, and the like can be used for the hologram 20. In the particular case of polymer materials, the refraction efficiency can be adjusted or the image fixed by UV irradiation or heating following hologram exposure, making it possible to fix the image without removing the exposed hologram 20 from the device shown in Fig. 2 and making it unnecessary to align the hologram 20 and the pinhole array PH thereafter.

Once the hologram exposure has been completed, the light detector array 9 is positioned in such a way that the aperture of each light detector matches the corresponding pinhole of the pinhole array PH. The optical system is then completed by installing the lens 14b if it has not been installed during the preceding hologram exposure.

The lens 14b is not needed during exposure if the hologram 20 is placed in the position shown by the solid lines in the drawing. Placing the hologram 20 in position *2 (broken line), however, requires that the lens 14b be installed during exposure. Furthermore, neither the lens 14a nor the lens 14b is needed during exposure if the hologram 20 is placed in position *1 (broken line).

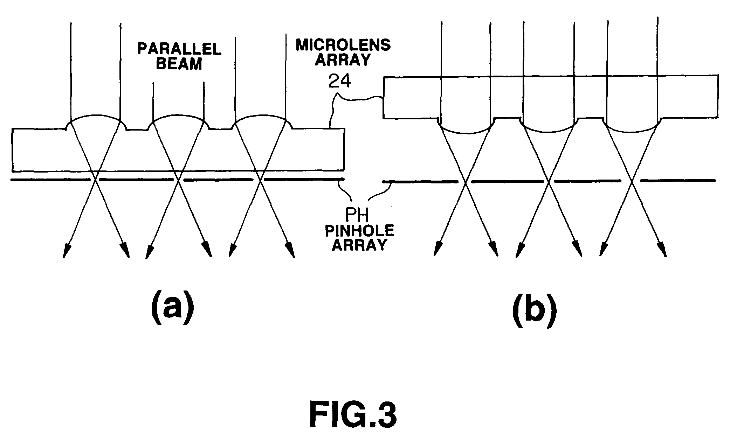

Fig. 3 depicts the manner in which a microlens array 24 is positioned in front of the pinhole array PH in order to improve the utilization ratio of light during hologram exposure and to set the number of apertures NA of the point light sources to a prescribed level. The hologram is exposed in the state shown. The lens pitch of the microlens array 24 is equal to the aperture pitch of the pinhole array PH.

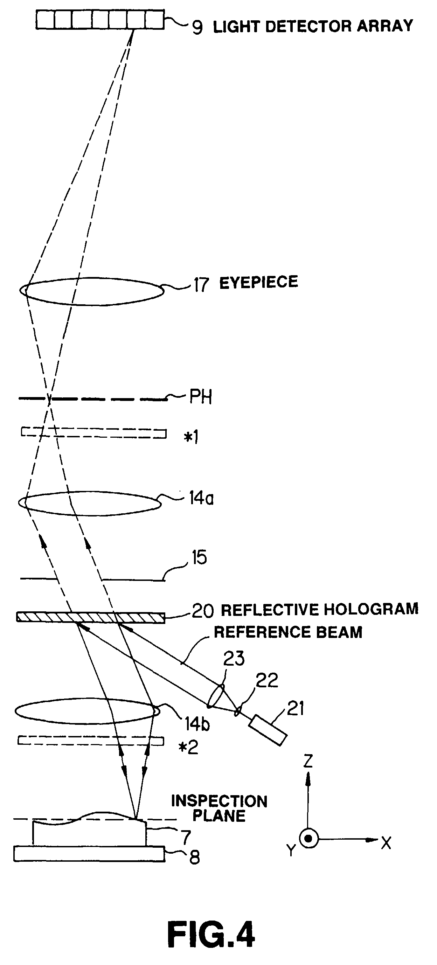

Fig. 4 depicts the second embodiment of this invention, in which a reflective hologram is used as the hologram 20. Specifically, a reference beam is directed at the hologram 20 from the opposite side of the pinhole array PH, with the hologram 20 positioned between the beam and the array. In the arrangement shown in Fig. 4, the hologram may be placed in position *1 or *2 (broken lines). It is apparent that in this embodiment, just as in the preceding first embodiment, the hologram 20 reproduces light that is equivalent to that reproduced when a point light source is positioned in each of the pinholes of the pinhole array PH.

An additional feature of the embodiment depicted in the drawing is that light passing through the pinholes of the pinhole array PH forms images in the light detectors of the light detector array 9 through the agency of the eyepiece 17 on a one-to-one basis. In this case, it is not necessary for the pitch of the pinholes of the pinhole array PH to be the same as the pitch of the light detectors of the light detector array 9, and each of the pitches should be set in accordance with the magnification of the eyepiece 17.

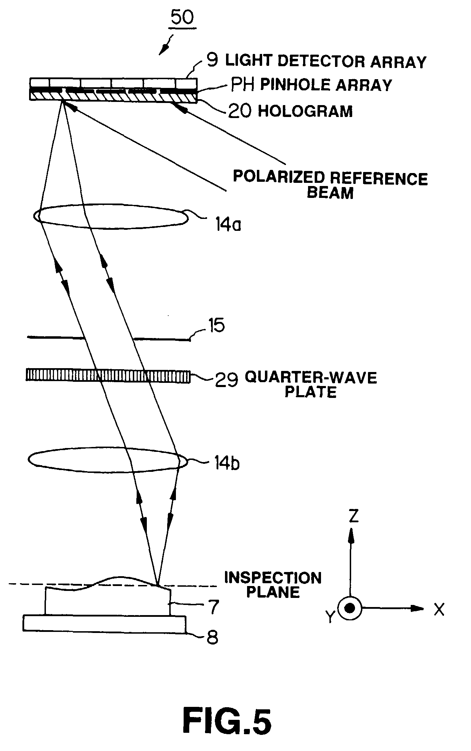

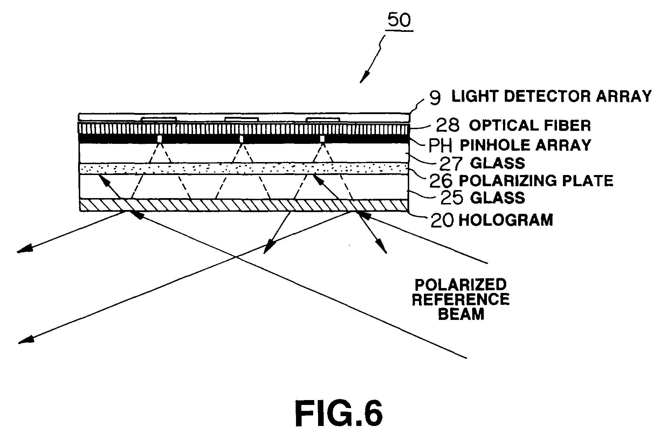

Fig. 5 depicts the third embodiment of this invention. The third embodiment, which is a modification of the example described above with reference to Fig. 4, is a special example in which the hologram 20 is placed in position *1 (broken line) in the embodiment of Fig. 4. In the third embodiment, the eyepiece 17 of Fig. 4 is dispensed with, and the light detector array 9, pinhole array PH, and hologram 20 are integrated into a laminated structure in the shape of a flat plate, as shown in Fig. 6. This integrated component will hereinafter be referred to as "laminated-structure unit 50."

Specifically, the laminated-structure unit 50 has a laminated structure comprising a hologram 20, a transparent optical substrate (glass substrate) 25, a polarizing plate 26, a glass substrate 27, a pinhole array PH, an optical fiber 28, and a light detector array 9, as shown in Fig. 6.

In the structure shown in Fig. 6, the hologram 20 and the pinhole array PH are in a close positional relation, making it possible for the reference beam passing through the hologram 20 to reach the detection plane of the light detector array 9 via the pinhole array PH. In addition, the hologram characteristics allow scattered or secondary refracted light to be reproduced, making it possible for these types of light to reach the detection plane of the light detector array 9 via the pinhole array PH in a similar manner.

To prevent these phenomena from occurring, a polarizing plate 26 is placed between the glass substrates 25 and 27, producing linearly polarized light on the side where the reference beam is blocked by the polarizing plate 26.

In the structures shown in Figs. 5 and 6, light from the point light sources reproduced by the hologram 20 is converted to circular polarized light by the action of a quarter-wave plate 29 and is caused by the lenses 14a and 14b of the telecentric optical system to form an image in the detection plane of the measurement object 7. Similarly, light reflected by the measurement object 7 forms an image on the pinholes of the pinhole array PH via the lens 14b, quarter-wave plate 29, and lens 14a. At this time, the circular polarized light reflected by the measurement object 7 can pass through the polarizing plate 26 because this light has been converted to linearly polarized light perpendicular to the reference beam by the action of the quarter-wave plate 29. Light entering the pinholes reaches the light detectors of the light detector array 9 through an optical-fiber bundle 28.

In the third embodiment, the light detector array 9, pinhole array PH, and hologram 20 are laminated and integrated on a flat surface, yielding a compact, lightweight, and stable confocal optical unit.

Another feature of the third embodiment is that three-dimensional measurements can be made at positions that correspond to the parts between the pinholes by adopting a structure in which the reference beam is converted to a parallel beam of prescribed incidence angle and in which the aforementioned laminated-structure unit 50 can move in X- and Y-directions.

Yet another feature of the third embodiment is that the incidence angle of the reference beam can be selected from a wide variety of values because the hologram 20 is a so-called image hologram in which the point light sources reproduced by the hologram lie close to it. Specifically, this is a structure in which light source of low spatial coherence can be adopted and in which considerable tolerance exists for the misregistration of the light sources because substantial tolerance is allowed for the angle or spatial coherence of the reference beam.

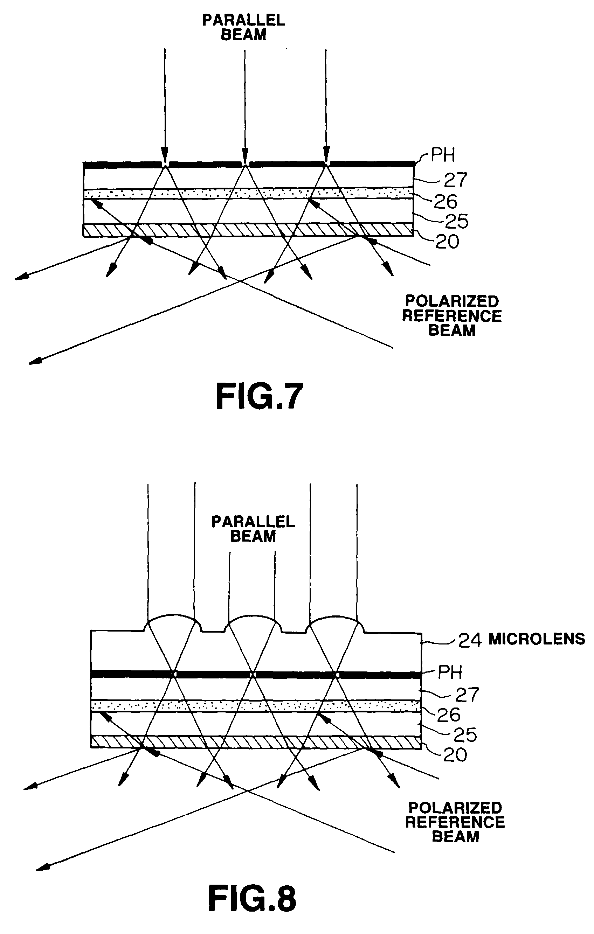

Fig. 7 depicts an arrangement for exposing the hologram 20 of the aforementioned laminated-structure unit 50. First, a pinhole array mask PH is formed on one side of the glass substrate 27, and a holographic material 20 is applied to one side of the glass substrate 25. In this state, a parallel beam is directed from the side of the pinhole array PH, and a reference beam is directed from the side of the hologram 20 so as to record light emitted from the pinhole array PH on the hologram 20. In the process, both the parallel beam and the reference beam are converted to light linearly polarized in the transmission direction of the polarizing plate 26 because exposure is impossible if these two types of light are linearly polarized in different directions. It is apparent that, as described above, the reference beam for reproducing the hologram is linearly polarized in the absorption direction of the polarizing plate 26 to prevent this light from passing through the polarizing plate 26 and reaching the pinholes.

It is also possible to improve the utilization ratio of light and to set the desired number of apertures NA of the point light sources by installing microlenses 24 when the hologram 20 of the aforementioned laminated-structure unit is exposed, as shown in Fig. 8.

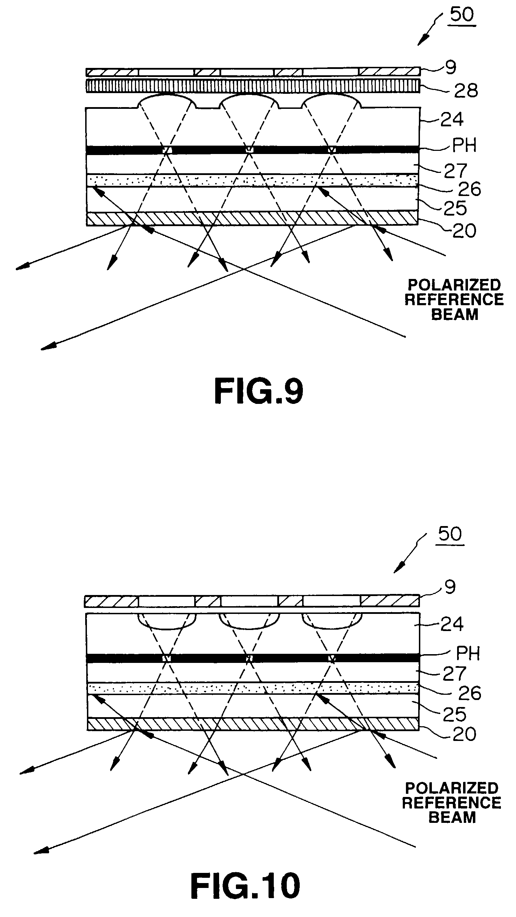

Fig. 9 depicts a modified example of the aforementioned laminated-structure unit 50. In this case, a microlens array 24 is placed between the optical fiber 28 and the pinhole array PH.

Fig. 10 depicts yet another modified example of the aforementioned laminated-structure unit. In this case, a microlens array 24 shaped as a flat plate is placed between the light detector array 9 and the pinhole array PH. In this case, the optical fiber 28 is dispensed with because sufficient adhesion can be provided between the light detector array 9 and the microlens array 24.

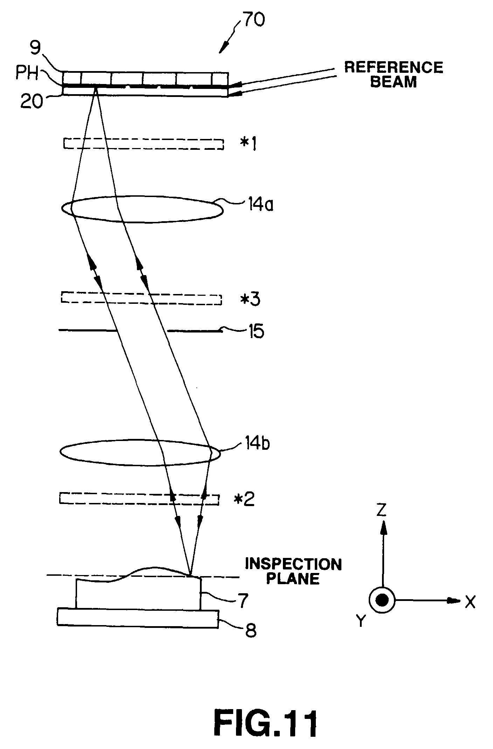

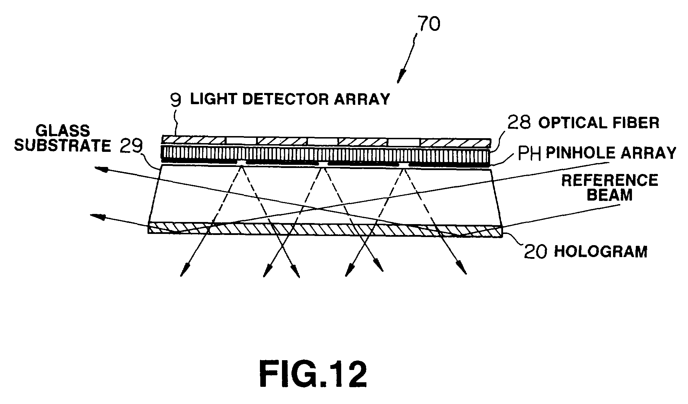

Fig. 11 depicts the fourth embodiment of this invention. In this case, an edge-illuminated hologram such as that described in USP 4,643,515 can be used as the hologram 20, making it possible for the reference beam to enter the side surface of the glass substrate of the hologram 20. Fig. 12 depicts the detailed structure of the laminated-structure unit 70 in Fig. 11. The structure comprises an edge-illuminated hologram 20, a glass substrate 29, a pinhole array PH, an optical fiber 28, and a light detector array 9.

The only difference between the fourth embodiment and the other embodiments is that the reference beam enters through the side surface of the hologram, with all the other features of the fourth embodiment being identical to those of the embodiments described above. This embodiment also allows the hologram 20 to be placed in position *1, *2, or *3 (broken lines in the drawings).

The fourth embodiment allows the confocal optical device to be made even more compact because the reference beam can enter through the side surface of the glass substrate of the hologram. Specifically, the lenses 14a and 14b of a telecentric system commonly form a multigroup, multiunit structure in order to improve aberration and other characteristics, and in the arrangements shown in Figs. 1 and 4 above, the lenses or aperture stops of the telecentric system must be positioned at certain intervals in order to prevent light reflected or transmitted by the hologram illuminated with the reference beam from directly reaching these optical components. By contrast, the result of using the aforementioned edge-illuminated hologram is that the angle of light reflected or transmitted by the hologram is very shallow, allowing the optical components of the aforementioned telecentric system to be brought closer together and making the device more compact.

Another feature of the laminated-structure unit 70 described with reference to Fig. 12 above is that because the reference beam strikes the hologram 20 at a shallow angle, reflected light usually does not reach the pinholes PH. Another feature is that even when the reflected light propagates toward the pinholes, the shallow angle at which the light strikes the glass interface on the pinhole side causes the light that has reached a critical angle to undergo total reflection and prevents this light from reaching the pinholes. The resulting advantage is that the polarizing plate 26 used in the embodiment described with reference to Fig. 6 or 9 above becomes unnecessary if the scattered or secondary refracted light from the hologram 20 has only a small effect.

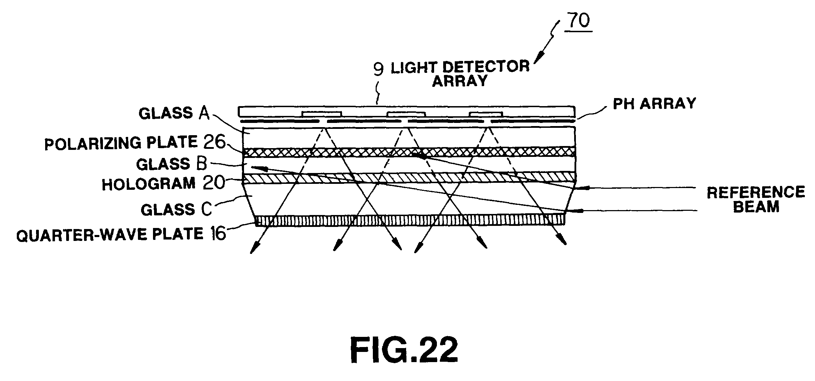

Fig. 22 depicts a modification of the laminated-structure unit 70 shown in Fig. 12. The modification is a reflective edge-illuminated hologram equipped with a polarizing plate 26 for blocking out the reference beam transmitted by the hologram 20 or the scattered or secondary refracted light of the hologram. In addition, a quarter-wave plate 16 is bonded to and integrated with glass C as a laminated structure.

Although the laminated-structure unit 70 is obtained using a transmissive or reflective hologram 20, it is also possible to use an edge-illuminated hologram in which the reference beam consists of evanescent waves.

In addition, filling the aforementioned laminated-structure units with a refractive solution for achieving an optical match between the laminated components is effective for preventing unneeded reflection and refraction.

It is also possible to dispense with the optical fiber 28 if sufficient adhesion is achieved between the pinhole array PH and the light detector array 9 of the laminated-structure unit in Fig. 6 or 12 , that is, if the resulting adhesion is sufficient to prevent stray light emitted by adjacent pinholes from entering the light detectors.

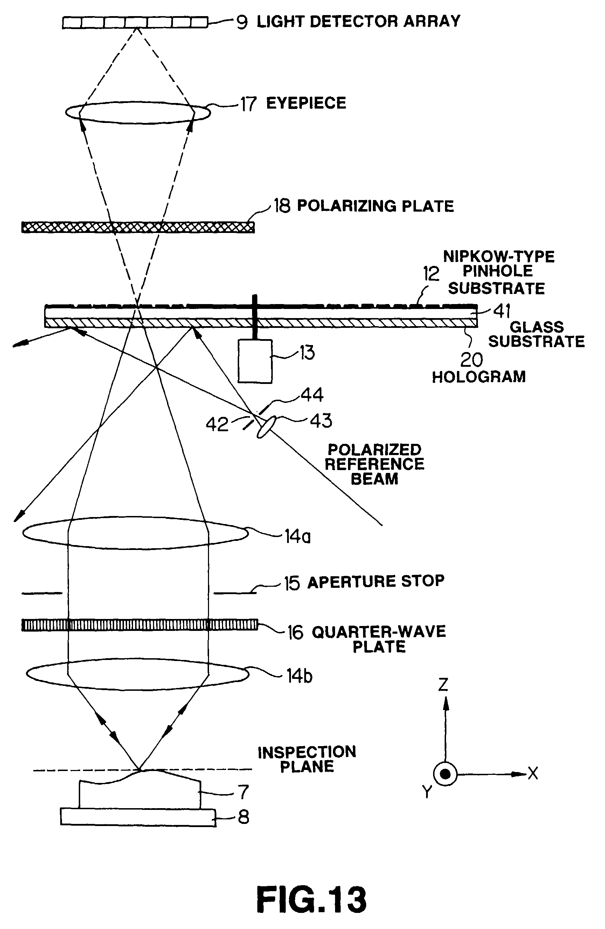

Fig. 13 depicts the fifth embodiment of this invention. In this embodiment, the present invention is adapted to the arrangement described above with reference to Fig. 21.

In the embodiment depicted in Fig. 13, a hologram 20 that acts in the same manner as in the arrangement described above with reference to Fig. 21 is positioned underneath a Nipkow-type pinhole substrate 12 and an interlying glass substrate 41, a point light source 42 for generating diffused spherical waves is positioned on the center axis of rotation of the pinhole substrate 12, and the hologram 20 is illuminated with a reference beam from the light source 42. To obtain a point light source 42 that is positioned on the center axis of rotation of the pinhole substrate 12, light is condensed by a lens 43 and passed through a pinhole 44, and the pinhole 44 is positioned on the center axis of rotation of the pinhole substrate 12.

Positioning a light source 42 of diffused spherical waves on the axis of rotation of the pinhole substrate 12 in such a manner makes it possible to illuminate the hologram 20 with spherical waves that retain a constant incidence angle in any position at a fixed radial distance of the hologram 20 and to vary by means of rotation the light reproduced by the hologram.

In this arrangement, illuminating the hologram 20 with a reference beam of diffused spherical waves of linearly polarized light allows the hologram 20 to reproduce light as if point light sources were positioned in each of the pinholes of the Nipkow-type pinhole substrate 12. The reproduced light is converted to circular polarized light by a quarter-wave plate 16 and is caused to form an image on the measurement object 7 of the moving stage 8 by a telecentric optical system comprising a lens 14a, an aperture stop 15, and a lens 14b. The plane of polarization of light reflected by the measurement object 7 is rotated 90° by the quarter-wave plate 16, and the light is condensed by the lenses 14a and 14b and passed through the same pinholes of the pinhole substrate 12. Light that has passed through the pinhole substrate 12 is directed at the eyepiece 17 via a polarizing plate 18 and is caused by the eyepiece 17 to form an image on the light detectors of the light detector array 9. The polarizing plate 18 is provided in order to prevent the reference beam transmitted, scattered, or secondarily refracted by the hologram 20 from entering the light detector array 9 via the pinholes of the pinhole substrate 12, and the polarization direction of the reference beam is set in such a way that light is absorbed by the pinhole substrate 12.

In comparison with the conventional arrangement described above with reference to Fig. 21, the embodiment in question allows the utilization ratio of the light source (reference beam) to be markedly improved and makes it unnecessary to take into account the aberration caused by the polarizing half-reflecting mirror 11 (Fig. 21). In addition, there is no deterioration in the S/N ratio of measurement signals based on light reflected from the pinhole substrate 12 because point light sources equivalent to light that has passed through the pinhole substrate are created by the hologram, unlike in the conventional arrangement, where light is projected from the reverse side of the pinhole substrate 12, point light sources are formed, and the light is received on the reverse side of the same pinhole substrate.

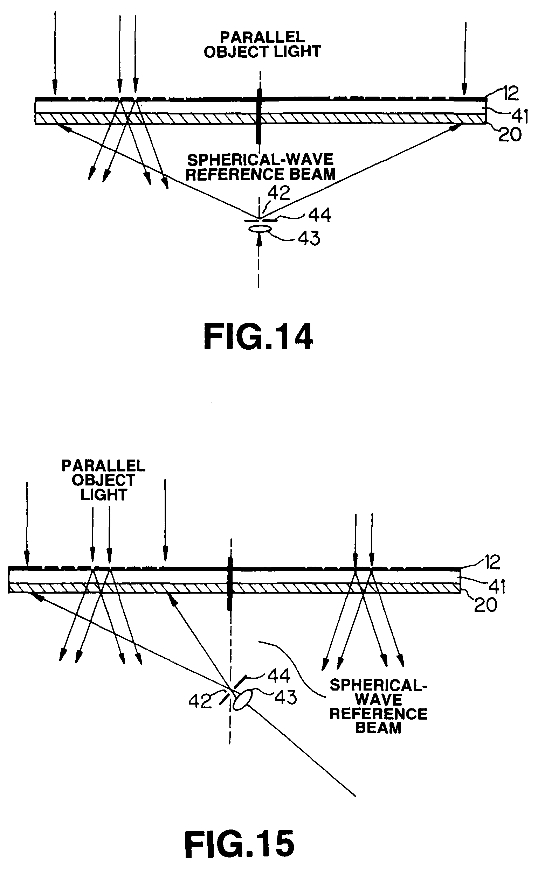

Figs. 14 and 15 depict arrangements for exposing the hologram 20 used in the embodiment described with reference to Fig. 13. Fig. 14 depicts a case in which the entire substrate of the hologram 20 is collectively exposed, and Fig. 15 depicts a case of divided exposure.

In Fig. 14, the hologram 20 is collectively illuminated with a reference beam emitted as a spherical wave by a point light source 42 located at a suitable position on the axis of rotation, and the pinholes are collectively illuminated by a parallel beam (object light) so as to collectively illuminate the hologram 20 in a structure obtained by the lamination of a Nipkow-type pinhole substrate 12, a glass substrate 41, and a hologram 20.

In Fig. 15, a partial area of the hologram 20 is illuminated with a reference beam emitted as a spherical wave by a point light source 42 located at a suitable position on the axis of rotation, and this partial area is illuminated with parallel object light so as to expose a partial area of the hologram in a structure obtained by laminating a Nipkow-type pinhole substrate 12, a glass substrate 41, and a hologram 20. The exposure position is subsequently changed by rotating the entire substrate, and the same exposure treatment is performed. The hologram is thus exposed in several separate cycles. With partial exposure, unexposed areas and already exposed areas must be covered with a mask to prevent exposure.

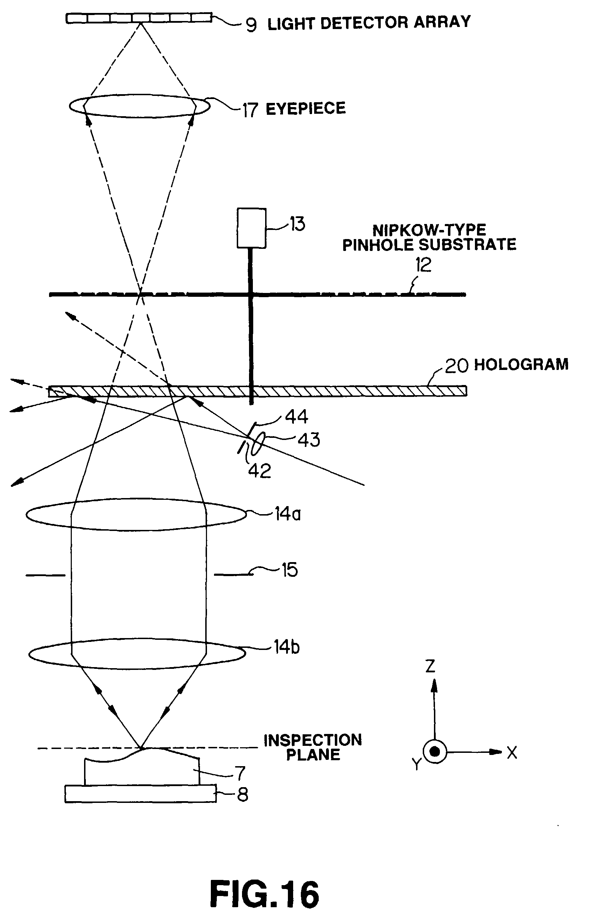

Fig. 16 depicts a modification of the fifth embodiment described above with reference to Fig. 13. Placing the hologram 20 apart from the Nipkow-type pinhole substrate 12 prevents situations in which the light of the reference beam transmitted by the hologram 20 is transmitted by the pinholes of the pinhole substrate 12 and is measured by the light detectors, or situations in which the reference beam is reflected by regions other than the pinholes of the pinhole substrate 12, transmitted by the pinholes, and measured by the light detectors. This arrangement makes it possible to dispense with the quarter-wave plate 16 and polarizing plate 18 used in the embodiment described above with reference to Fig. 13. It is apparent from Fig. 16 that there is no need to convert the reference beam to linearly polarized light, that the hologram 20 and the pinhole array 12 have a common axis of rotation, and that these components rotate completely synchronously.

Although the pinhole substrate 12 and the hologram 20 in the embodiment described above with reference to Fig. 16 are fixed on a common axis of rotation, it is also possible for the pinhole substrate 12 and the hologram 20 to be positioned on a common cylinder.

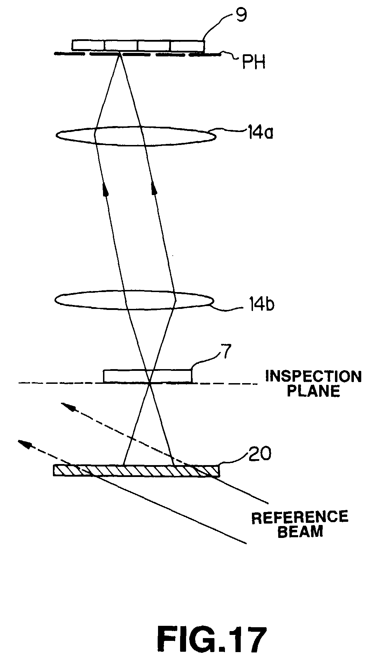

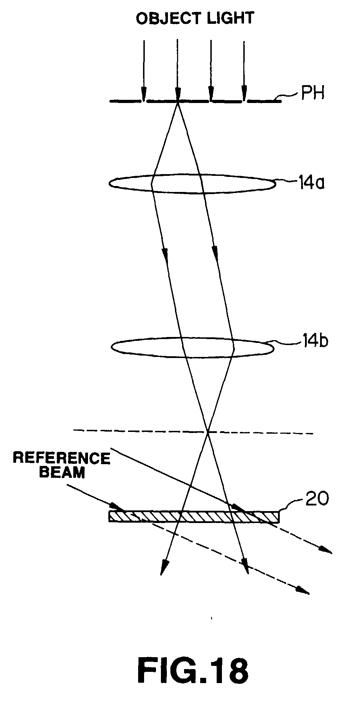

Figs. 17 through 19 depict the sixth embodiment of this invention, in which the present invention is applied to a transmissive confocal optical device. Fig. 17 depicts an arrangement for three-dimensional measurements, and Fig. 18 depicts an arrangement for exposing holograms.

During hologram exposure, a pinhole array PH, lenses 14a and 14b, and a hologram 20 are arranged in accordance with the same positional relation as in Fig. 17, the pinhole array PH is illuminated with object light, and a reference beam is allowed to strike the hologram 20, as shown in Fig. 18. As a result, light reaching the hologram 20 via the lenses 14a and 14b from the point light source images located in the pinhole positions of the pinhole array PH is recorded on the hologram 20 by the reference beam.

During three-dimensional measurements, a measurement object 7 is positioned in the detection plane, and light conjugate to the reference beam during hologram exposure, that is, light propagating in the reverse direction with respect to the reference beam, strikes the hologram 20 as the reference beam, as shown in Fig. 17. Due to this reference beam, the hologram 20 reproduces light that connects the foci in the detection plane and the foci in the pinhole array PH, that is, light that propagates in the reverse direction with respect to the direction adopted during recording, as shown in Fig. 17.

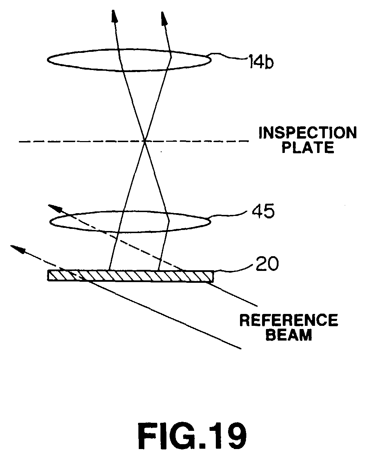

Consequently, a measurement object placed in the detection plane is illuminated by the reproduced light of the hologram 20, and transmitted light reaches the light detector array 9 via the pinhole array PH, making it possible to observe the incident light with the aid of light detectors. The embodiment in question also allows a relay lens 45 to be placed between the hologram 20 and the detection plane, as shown in Fig. 19.

In the embodiment in question, a very small and lightweight device can be obtained by replacing the hologram with a light source, and there is no need to use or align the projection-side pinholes and the image-forming lenses needed for the conventional devices. The utilization ratio of light from the light sources can also be markedly improved.

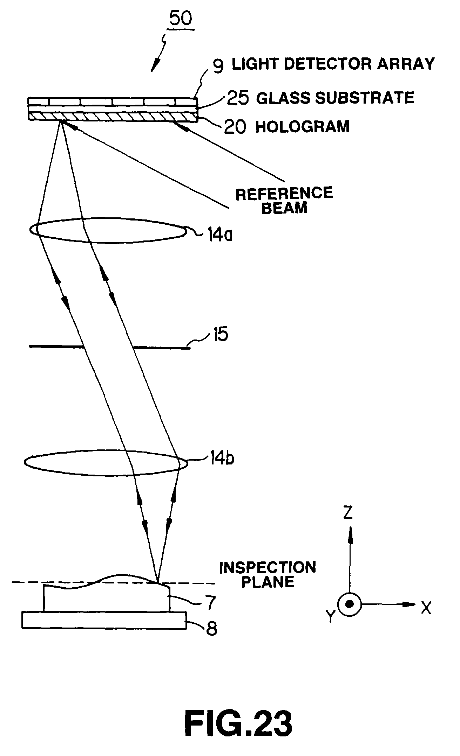

Fig. 23 depicts still another embodiment of this invention. In this embodiment, the pinhole array PH is dispensed with, and a glass substrate 25 is installed in its place. In addition, the hologram 20, the glass substrate 25, and the light detector array 9 are integrated into a laminated structure shaped as a flat plate.

This embodiment involves an arrangement in which, for example, a pinhole array is located at the position of the light detector array 9 (the light detectors of the light detector array and the pinholes of the pinhole array are in a one-to-one positional relation) during the exposure of the hologram 20, the pinhole array is illuminated with a parallel beam such as that shown in Fig. 3, and the hologram is illuminated with a reference beam so that this hologram is exposed as if point light sources were positioned on the light detectors of the light detector array 9.

Consequently, directing a reference beam to the hologram 20 in the embodiment described with reference to Fig. 23 allows the hologram 20 to reproduce light that is equivalent to that emitted by point light sources positioned in the light detectors of the light detector array 9 and causes the reproduced light to form an image on the measurement object 7 of the moving stage 8 via the lens 14a, aperture stop 15, and lens 14b. Light reflected by the measurement object 7 forms images on the light detectors of the light detector array 9 via the lens 14b, aperture stop 15, lens 14a, hologram 20, and glass substrate 25.

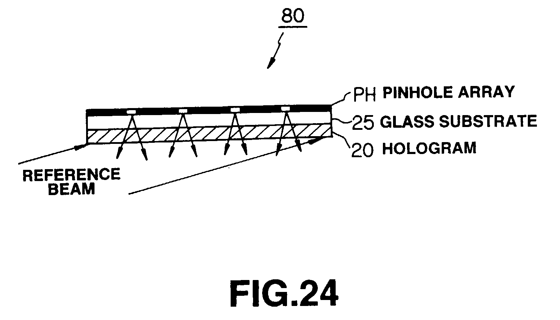

Fig. 24 depicts a laminated-structure unit 80 that is obtained by removing the polarizing plate 26 from the laminated-structure unit 50 described above with reference to Fig. 7 and that corresponds to the laminated-structure unit (Nipkow-type pinhole substrate 12, glass substrate 41, and hologram 20) described above with reference to Fig. 13. Of the laminated-structure units described with reference to the above embodiments, the laminated-structure unit 80 has the most basic structure.

Basically, the laminated-structure unit 80 performs the same action as pinholes, but the light-emission action is performed by a hologram 20, and the light-reception action is performed by a pinhole array PH. Specifically, light from point light sources is not generated by illuminating pinholes with light but is reproduced as equivalent light by the hologram 20.

Because the laminated-structure unit 80 generates light from point light sources with the aid of the hologram 20, the utilization efficiency of light is much better than in the past, and it is possible to efficiently prevent light emitted by a light source (light from the light source 1 in Fig. 20) and directed at the pinhole array PH from being reflected by portions other than the pinholes and directed at the light detector array 9 (see Fig. 1), as described above.

Although the embodiments described above concerned arrangements in which a moving stage 8 was provided for movably scanning objects in the Z-direction and which allowed a measurement object 7 to move in the Z-direction, it is also possible to move the entire confocal optical device in the Z-direction or to move the object lenses 14a and 14b of the telecentric optical system in the Z-direction. In addition, the magnification of the telecentric optical system can be positive, negative, or zero.

The pinhole arrays used in the embodiments described above should have a low reflectivity in the shade portions in order to prevent unneeded reflection. The three-layer film Cr₂O₃/Cr/Cr₂O₃ is suitable, for example.

The aperture diameter and the aperture pitch of the pinhole arrays used in the embodiments described above are similar to the other parameters of a confocal optical system. For example, selecting an aperture pitch that is equal to at least 10 aperture diameters is suitable for obtaining an adequate confocal effect. Similar to other parameters of a confocal optical system, the size of the aperture diameter should be set with consideration for the refractive limits of the object lenses 14a and 14b of the telecentric optical system.

The hologram 20 used in the embodiment described above may be obtained by applying a holographic material to a glass substrate. In this case, the hologram glass substrate may be positioned at an incline to the optical axis in order to prevent multiple reflection of light from the surfaces of the hologram or glass substrate.

An alternative is to obtain the hologram 20 used in the embodiments described above by applying a holographic material to the object lens 14a or 14b of the telecentric optical system and to use the lens itself as the hologram substrate.

An MOS- or CCD-area sensor is also suitable as the light detector array 9 for the embodiments described above.

Furthermore, the embodiments do not require that the reference beam or object light be a parallel beam, and diffused light may be used as well. In particular, the embodiments described above with reference to Figs. 1, 4, 5, 11, and 17 involved using parallel-plane light beams as reference beams, but scan-type slit light can also be used.

In addition, the reference beam used during hologram reproduction in the embodiments described above can be an electromagnetic wave of any coherence as long as this electromagnetic wave has the spatial or temporal coherence needed for the reproduction of the hologram 20. When, for example, a reflective hologram such as that described above with reference to Fig. 4, 5, 13, or 16 is adopted, the wavelength selectivity of the reflective hologram allows a reference beam of low temporal coherence (monochromaticity) to be used. When an image hologram is adopted, as described above with reference to Fig. 5, 12, or 13, the angular selectivity of the image hologram allows a reference-beam light source of low spatial coherence to be used. Light sources of required wavelength and spatial and temporal coherence should therefore be selected as the light sources for reference beams in conjunction with hologram characteristics from among lasers of high spatial and temporal coherence, mercury and tungsten lamps of low spatial and temporal coherence, and devices such as LEDs, superluminescent diodes, and laser diodes.

Furthermore, similar to other embodiments, the embodiments described above with reference to Figs. 1, 4, 12, 16, and 17 allow a polarizing plate and a quarter-wave plate to be adopted because of design considerations when a reference beam transmitted by the hologram 20, or scattered or secondary refracted light from the hologram 20 is likely to reach the detection plane of the light detector array 9. The polarizing plate and quarter-wave plate can be installed in arbitrary positions, and the polarizing plate may be installed between the pinhole array PH and the light detector array 9 or between the hologram 20 and the pinhole array PH. The quarter-wave plate can be installed anywhere between the hologram 20 and the detection plane.

In addition, the laminated-structure unit 50 that is devoid of pinhole arrays and that is depicted in Fig. 23 may be adapted to the embodiments described above with reference to Figs. 1, 2, 4, 5, 11, 13, 16, and 17.

The embodiments described above also allow fluorescence emitted by the illuminated measurement object itself to be detected instead of the light reflected by the measurement object. In this case, a band-pass filter for transmitting wavelengths in the luminescent range may be installed between the pinhole array PH and the light detector array 9 or between the hologram 20 and the pinhole array PH in order to block light other than that in the luminescent range.

Although only one example of each of the constituent elements of the confocal optical system has been described, other arrangements are also possible as long as the same functions as those described in the above embodiment can be achieved.

### INDUSTRIAL APPLICABILITY

This invention can be employed as a three-dimensional shape measuring device equipped with a confocal optical system.

Specifically, this invention uses a hologram to reproduce light that is equivalent to that emitted by point light sources and allows the hologram to function as a point light source array and a half-reflecting mirror, making it unnecessary to align the pinhole array for the point light sources and the pinhole array for light reception. Another advantage is that because a hologram is thinner than a half-reflecting mirror, optical aberration or positional interference with the object lens is extremely small.

Yet another advantage is that because the refraction efficiency of the hologram can be set as needed, the utilization efficiency of light from a light source can be dramatically improved in comparison with a conventional pinhole system by setting the refraction efficiency to about 50%, for example. In addition, light emitted by a light source and directed at a pinhole array can be securely prevented from being reflected by and observed on portions other than pinholes. Such reflection has been a drawback of prior art.

Furthermore, laminating a light detector array, an aperture array, and a hologram into an integrated structure on a plane makes it possible to obtain a compact, lightweight, and stable confocal optical unit capable of withstanding high-speed movement and scanning.

## Claims

1. A confocal optical device, comprising:
an aperture;
a measurement object positioned at a prescribed inspection point;
optical means for guiding light in such a way that a position of the aperture serves as a first condensing position, and a position of the inspection point serves as a second condensing position;
a light source for a reference beam of a hologram;
the hologram that is placed in a prescribed position between the aperture and the inspection point, that uses light from the light source as the reference beam, and that reproduces light equivalent to that obtained when the light from point light sources that is emitted by the aperture passes through the predetermined position; and
a light detector that is positioned on a side opposite the optical means and the interlying aperture and that detects light that has passed through the aperture;
wherein hologram-reproduced light scattered by the measurement object is directed at the light detector via the hologram, optical means, and aperture.

2. A confocal optical device, comprising:
an aperture array having a plurality of apertures arranged in two dimensions;
a measurement object positioned on a prescribed inspection plane;
optical means for guiding light in such a way that a position of the aperture array serves as a first condensing position, and a position of the inspection plane serves as a second condensing position;
a light source for a reference beam of a hologram;
the hologram that is placed in a prescribed position between the aperture array and the inspection plane, that uses light from the light source as the reference beam, and that reproduces light equivalent to that obtained when the light from point light sources that is emitted by the apertures of the aperture array passes through the predetermined position; and
a light detector array that is composed of a plurality of light detectors, that is positioned on a side opposite the optical means and the interlying aperture array, and that detects light that has passed through the apertures of the aperture array;
wherein hologram-reproduced light scattered by the measurement object is directed at the light detectors of the light detector array via the hologram, optical means, and aperture array.

3. A confocal optical device as defined in Claim 2, further comprising an eyepiece for guiding light that has passed through the apertures of the aperture array toward the light detectors of the light detector array.

4. A confocal optical device, comprising:
an aperture array having a plurality of apertures arranged in two dimensions;
a light-transmitting measurement object positioned on a prescribed inspection plane;
optical means for guiding light in such a way that a position of the aperture array serves as a first condensing position, and a position of the inspection plane serves as a second condensing position;
a light source for a reference beam of a hologram;
the hologram that is placed in a prescribed position on a side opposite the optical means and the interlying measurement object on the inspection plane, that uses light from the light source as the reference beam, and that reproduces light equivalent to the light reverse with respect to light obtained when the light from point light sources that is emitted by the apertures of the aperture array passes through the predetermined position; and
a light detector array that is composed of a plurality of light detectors, that is positioned on the side opposite the optical means and the interlying aperture array, and that detects light that has passed through the apertures of the aperture array;
wherein the hologram-reproduced light transmitted by the measurement object is directed at the light detectors of the light detector array via the optical means and aperture array.

5. A confocal optical device as defined in Claim 1, 2, or 4, wherein an incidence angle of the reference beam is set in such a way that light reflected or transmitted by the hologram is not directed toward the detection plane of the measurement object or the detection plane of the light detectors.

6. A confocal optical device as defined in Claim 2, wherein the aperture array and the hologram are integrally laminated.

7. A confocal optical device as defined in Claim 2, wherein a lens array is installed between the aperture array and the light detector array, and the lens array, aperture array, and hologram are integrally laminated.

8. A confocal optical device as defined in Claim 2, further comprising an optical fiber bundle for guiding detection light from the apertures of the aperture array to the light detectors of the light detector array.

9. A confocal optical device as defined in Claim 2, wherein the reference beam is linearly polarized light, a quarter-wave plate is installed between the hologram and the measurement object, and a polarizing plate is installed between the hologram and the light detector array.

10. A confocal optical device, comprising:
a light detector array composed of a plurality of light detectors arranged in two dimensions;
a measurement object positioned on a prescribed inspection plane;
optical means for guiding light in such a way that a position of each light detector of the light detector array serves as a first condensing position, and a position of the inspection plane serves as a second condensing position;
a light source for a reference beam of a hologram; and
the hologram that is placed between the light detector array and the optical means, that uses light from the light source as the reference beam, and that reproduces light equivalent to the light from point light sources that is emitted from the position of each light detector of the light detector array;
wherein the hologram-reproduced light is used to illuminate the measurement object via the optical means, and hologram-reproduced light scattered by the measurement object is directed at the light detectors of the light detector array via the optical means and hologram.

11. A confocal optical device as defined in Claim 10, wherein a glass substrate is sandwiched between the hologram and the light detector array to form a laminate.

12. An optical device, comprising:
an aperture array composed of a plurality of apertures arranged in two dimensions;
a glass substrate laminated underneath the aperture array; and
a hologram that is laminated underneath the glass substrate and that reproduces light equivalent to the light from point light sources that is emitted by the apertures of the aperture array when illuminated with a reference beam;
wherein the aperture array and hologram act as pinholes.
